# EUROPEAN PATENT SPECIFICATION

(11) **EP 1 956 888 B1**
(45) Date of publication and mention of the grant of the patent: **19.03.2014**
(21) Application number: 05853019.7
(22) Date of filing: 06.12.2005
(51) Int. Cl.: A01K 15/02

(54) **HIGH-THROUGHPUT OPERANT SENSORY DISCRIMINATION APPARATUS AND METHOD**
VORRICHTUNG UND VERFAHREN ZUR OPERANTEN SENSORISCHEN DISKRIMINIERUNG MIT HOHEM DURCHSATZ
APPAREIL ET PROCÉDÉ DE DISCRIMINATION SENSORIELLE OPÉRANT A HAUT DÉBIT

(43) Date of publication of application: 20.08.2008
(73) Proprietor: Opertech Bio, Inc., Philadelphia PA 19141- 3018 (US)
(72) Inventor: PALMER, R., Kyle, Cranbury, New Jersey 08512 (US); SALEMME, F., Raymond, Yardley, PA 19067 (US)
(74) Representative: Algemeen Octrooi- en Merkenbureau B.V.
(86) International application number: PCT/US2005/043982
(87) International publication number: WO 2007/067170

(56) References cited:
- EP-B1- 1 061 796
- US-A- 3 011 476
- US-A- 3 269 358
- US-A- 3 830 201
- US-A- 4 834 801
- US-A1- 2001 047 771
- US-A1- 2003 028 327
- US-A1- 2005 066 910
- US-B1- 6 234 111
- US-B2- 6 899 542

## Description

### BACKGROUND OF THE INVENTION

### Field of the Invention

The present disclosure relates to apparatus and methods for use in animal sensory discrimination. See e.g. document EP-B-1061796.

### Background of the Invention

Current designs of operant chambers used in animal sensory tests are often based on fluid delivery systems that utilize a limited number of reservoirs connected through tubing to a manifold that is in turn connected to a spout. Sample flow is often controlled by gravity. Clogging of the tubing often complicates sample delivery. Although this type of apparatus does provide some insight into what the animal senses, such designs limit the number of solutions that can be sampled by an animal, as well as the rate at which they can be tested.

An alternative approach to taste measurement that is higher throughput uses an apparatus usually referred to as a "lickometer," which records the number of "licks" or tastes that an animal takes of a particular sample. This method, however, only provides an indication of whether a solution is avoided or preferred, and therefore does not provide a direct indication of whether the sample is similar to or different from what the animal has been trained to detect, e.g., salty, sweet, spicy, bitter, etc.

US 6,899,542 describes a method of measuring memory and learning capabilities of a small animal by measuring the position of the small mammal in response to various stimuli.

What is needed is a sensory discrimination apparatus that allows multiple samples to be rapidly tested, and also allows a direct measure of the sensory perception of the animal.

### SUMMARY OF THE INVENTION

This disclosure provides apparatus and methods for use in animal sensory discrimination. A high-throughput, multiple sample apparatus is provided that allows for rapid sampling of any number of test samples by a subject; all within a self-contained, low contamination environment. Exemplary embodiments allow for sampling of a plurality of separate sensory samples that require very small amounts of sample.

Further embodiments, features, and advantages, as well as the structure and operation of the various embodiments are described in detail below with reference to accompanying drawings.

### BRIEF DESCRIPTION OF THE FIGURES

The disclosure is described with reference to the accompanying drawings. In the drawings, like reference numbers indicate identical or functionally similar elements.
Figure 1 shows an exemplary sensory discrimination apparatus.
Figure 2 shows a flowchart of a method for carrying out sensory discrimination.
Figure 3 shows a flowchart of another method for carrying out sensory discrimination.
Figure 4 shows a flowchart of a further method for carrying out sensory discrimination.
Figure 5 shows a flowchart of a still further method for carrying out sensory discrimination.
Figure 6 shows a flowchart of an exemplary sensory discrimination session.

### DETAILED DESCRIPTION OF THE INVENTION

It should be appreciated that the particular implementations shown and described herein are examples and are not intended to otherwise limit the scope of the disclosure in any way.

An apparatus for use in animal sensory discrimination according to claim 1 is provided, comprising: a support platform, means for supporting one or more samples, means for signaling an animal to sample the contents of the one or more samples, and means for the animal to record a sensory response to the sampled one or more samples. There is also provided a method of obtaining an animal's response to one or more test samples according to claim 18.

As used herein, the term animal refers to animals of any species, including, but not limited to, mice, rats, rabbits, hamsters, guinea pigs and non-human primates (e.g., baboons, monkeys, and chimpanzees).

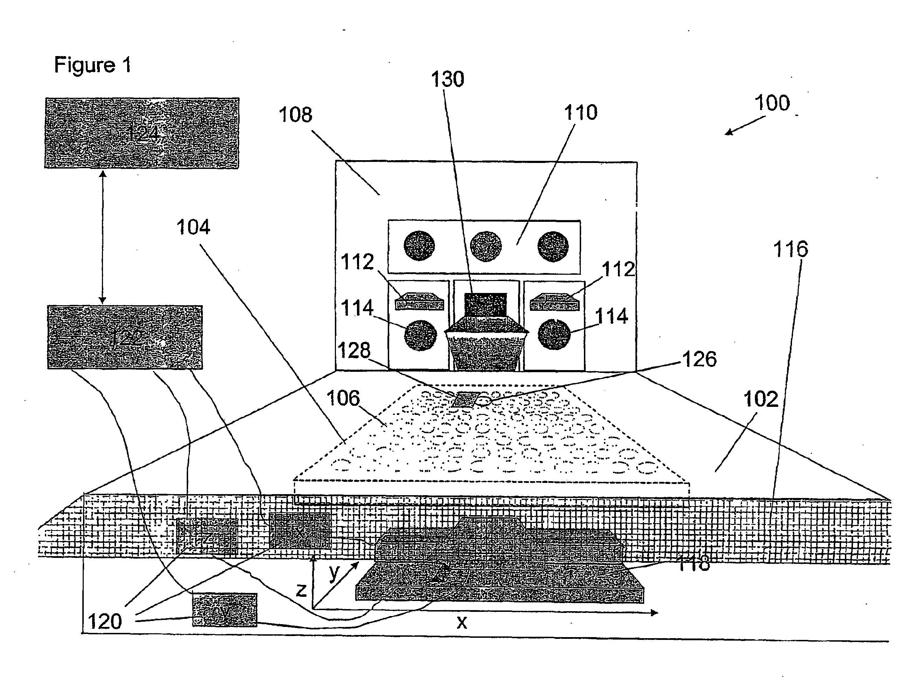

Figure 1 shows an exemplary apparatus 100 for use in animal sensory discrimination. As shown in Figure 1, apparatus 100 comprises a support platform 102. Suitably, support platform 102 will be a stainless steel or other material plate or floor, but can be any similar support platform on which an animal can be positioned, e.g. a table top, lab bench, cart or the like. In addition, the animal can be supported by other means, for example a sling, net, or similar device that supports the animal while it is participating in sensory discrimination analysis. Additional means for supporting the animal during analysis can be readily determined by the skilled artisan and used in the apparatus and methods described herein. Support platform 102 suitably comprises an area large enough such that an animal can position itself to gain access to a sample support means 104. A grid floor 116, suitably screen mesh or bars of an animal cage, lies adjacent, and in same plane as support platform 102 (suitably an extension of support platform 102). Grid floor 116 is designed to allow animal waste to pass through, and may constitute part of the animal's temporary or permanent housing.

As shown in Figure 1, apparatus 100 also comprises means for supporting the one or more samples, such as a sample plate 104 having a plurality of sample wells 106 formed therein. As used herein, the term plurality is used to indicate more than 1 of an item. For example, a plurality of sample wells indicates 2, 3, 4, 5, 10, 20, 30, 40, 50, 100, 200, 300, etc. sample wells. Means for supporting one or more samples also includes additional means readily determined by the skilled artisan. In suitable embodiments, sample support means comprises a sample plate comprising about 4 to about 100 sample wells, for example, about 4, 6, 12, 24, 48 or 96 wells. Larger size sample plates can also be used, for example sample plates comprising 192 wells, 384 wells, etc.

As shown in Figure **1****,** apparatus **100** also comprises means for signaling an animal to sample the contents of the one or more samples. Signaling means suitably comprise an operand panel **108,** having one or more signal lights **110.** Operant panel **108** is a modular unit that comprises means for signaling the animal as well as means for the animal to record a sensory response to the sample(s) and means for rewarding the animal (discussed below). Any combination of signaling means and rewarding means (as well as additional functionalities) can be interchanged in operant panel **108.** Means for signaling the animal, in addition to signal lights **110,** may include signal buzzers, alarms, bells or other noise making devices, additional visual signals, such as moving panels or flags and the like. Means for signaling the animal also include additional means readily determined by the skilled artisan.

Apparatus **100** also comprises means for the animal to record a sensory response to the sampled one or more samples. Exemplary means for obtaining the animals' response include one or more levers **112** and/or one or more nose poke wells **114,** as part of operant panel **108.** Means for the animal to record a sensory response to the sampled one or more samples can be used in various combinations. For example, a lever can be used for the animal to record a sensory response to one type of sample and a nose poke well can be used for the animal to record a sensory response to another type of sample. While Figure **1** shows the use of two levers **112** and two nose poke wells **114,** any combination or number of such means for the animal to record a sensory response can be used. Upon contact by the animal (e.g., being pressed by the animal's nose or paw), levers **112** generate a signal that indicates that the animal has recorded its response to a sample. Nose poke wells **114** often comprise a light beam or similar device, such that when the nose (or paw) of the animal breaks the plane of the light beam, a signal is generated that indicates that the animal has recorded its response to a sample. Additional means for the animal to record a sensory response to the samples include licking spouts, chain pulls (e.g., for use with primates) and the like. Means for the animal to record a sensory response to the samples include additional means readily determined by the skilled artisan.

Animals can be trained to sample and recognize any number of different kinds of sensory stimuli, and then respond accordingly. For example, one lever (the left lever **112** for example) is contacted when the animal samples a sample that it has been trained to recognize. In such a scenario, an additional lever (the right lever **112** for example) is contacted when the animal samples a sample that it has not been trained to recognize. For example, if the animal has been trained to recognize bitter-tasting samples, and it samples something that it determines is not bitter (e.g., sweet, spicy, salty, or control - i.e. no real discernable flavor), it would contact the right lever. However, upon sampling something bitter, it would contact the left lever indicating that the sample has a taste similar or identical to what it has been trained to recognize. Such a scenario can be carried out using the nose poke wells **114,** or nose poke wells in combination with levers **112,** in a similar manner. The animal can also be trained to recognize several different types of samples, and thus three or more levers (or nose poke wells) can be used during such an analysis (e.g. one lever for sweet, one lever for salty, one lever for not-trained to recognize).

As shown in Figure **1**, apparatus **100** further comprises means for moving sample support means **104** and support platform **102** relative to each other. Moving means suitably is able to move sample support means, e.g. sample plate **104,** and support platform **102,** relative to each other in at least two orthogonal directions. Moving means, as shown in Figure **1****,** can be, for example, a motion table **118.** As shown in Figure **1****,** motion table **118** can move sample plate **104** in both the x and y directions, i.e. in the plane of sample support **104.** In addition, motion table **118** can also be equipped to move sample plate **104** in the z direction, i.e. normal to the plane of support platform **102.** Motion table **118** can be a single direction motion table (i.e., x, y, or z), an x-y motion table or an x-y-z motion table, or any combination thereof. As shown in Figure **1****,** motion table **118** is connected to drivers **120** (x, y and/or z directions), an interface **122** and a computer **124** that control the motion of motion table **118,** specifically controlling the timing, direction and distance that sample support means **104,** and/or support platform 102, are moved. Moving means can also comprise a mechanism by which support platform **102** is moved relative to sample plate **104,** while keeping sample plate **104** stationary, or both support platform **102** and sample plate **104** can be moved relative to each other at the same time. Means for moving sample support means and support platform relative to each other include additional means readily determined by the skilled artisan.

Apparatus **100,** as shown in Figure **1****,** can also further comprise means for concealing the one or more samples. Concealing means can comprise one or more movable partitions. As used herein, the term movable partitions includes partitions such as, but not limited to, sliding doors, panels, curtains, levers, barriers, gates, hatches, walls, dividers and the like. Means for concealing the one or more samples include additional means readily determined by the skilled artisan.

For example, sample support means can be accessible to the animal at all times (e.g., positioned on the support platform with the animal), but the individual samples (e.g., wells **106)** on the sample support means (e.g., support plate **104)** can either be collectively or individually concealed from the animal. In such embodiments, each individual sample can be concealed from the animal, for example by placing a door or panel over each separate sample, or all of the samples can be collectively concealed from the animal, for example by using a door, panel or curtain to conceal the sample. When the partition is removed, the animal is then able to sample the individual sample, or collectively all of the samples, or any combination thereof.

In exemplary apparatus **100** shown in Figure **1****,** sample support means, i.e. sample plate **104,** is oriented below support platform **102.** It should be understood that the spatial descriptions (e.g., "above", "below", "up", "down", "top", "bottom", etc.) made herein are for purposes of illustration only, and that the apparatus described herein be spatially arranged in any orientation or manner. As shown in Figure **1****,** support platform **102** can comprise one or more apertures **126** that allow access to sample support means (e.g., sample plate **104)** situated below support platform **102.** Aperture **126** is shown as a circular hole in support platform **102,** but it should be understood that aperture **126** can be of any size or orientation that allows access to the sample support means. In addition, multiple apertures **126** can be made in support platform **102,** such that multiple, or even every, individual samples on the sample support means (e.g., wells **106** formed on sample plate **104)** are accessible to the animal.

In addition to one or more apertures **126,** support platform **102** can also comprise means for concealing the sample support means, such as one or more partitions **128** covering one or more apertures **126.** For example, if the sample support means (e.g., sample plate **104**) is oriented below support platform **102,** such that sample plate **104** can be accessed by an animal on support platform 102 through one or more apertures **126,** one or more partitions **128** can be used to conceal sample plate **104** from the animal by covering over apertures **126** until such time that the operator wishes to reveal the sample(s) to the animal. As discussed throughout, partition **128** can comprise a sliding door or panel or other suitable concealing device that can then be moved to reveal a well **106** on sample plate **104** below the support platform **102.**

As shown in Figure 1, apparatus **100** can also further comprise means for rewarding the animal, for example, food hopper **130.** Other means for rewarding the animal, for example, a water dispenser, salt lick, toy or other reward mechanism can also be used. In addition, means for rewarding the animal can include some form of physical or other rewarding stimulation (e.g., petting, grooming, etc.) Means for rewarding the animal include additional means readily determined by the skilled artisan.

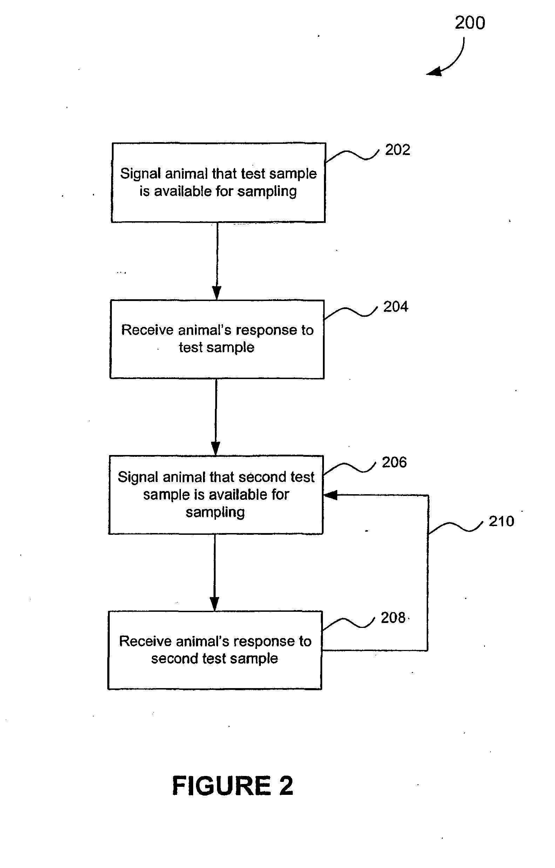

Figure **2** shows a flowchart **200** describing a method of obtaining an animal's response to one or more test samples for use with an apparatus comprising: a support platform, means for supporting one or more samples, means for signaling an animal to sample the contents of the one or more samples, and means for the animal to record a sensory response to the sampled one or more samples.

In step **202,** an animal is signaled that a test sample is available for sampling. In step **204,** the animal's response to the test sample is received. The animal can be signaled that a sample is available for sampling using any suitable means described herein or known in the art. For example, a signal light, bell, whistle, alarm or other signaling means can be used to signal the animal that a test sample on the sample support means is available for sampling.

After the animal has sampled the contents of the sample, the animal's response to the sample is received through the use of means for the animal to record a sensory response. (The terms "received" and "obtained" are used interchangeably herein as they pertain to the animal's response). For example, the animal may contact a lever, or trigger a nose-poke well, to indicate that it has sampled the contents of the sample and determined that it is something it has been trained to recognize, or, alternatively, that it is not something it has been trained to recognize.

Following obtaining the animal's response to the first sample, at step **206,** the animal is signaled that a second test sample is available for sampling. In step **208,** the animal's response to the second test sample is then received. As shown in step **210,** steps **206** and **208** can be repeated until all of the samples have been sampled by the animal (i.e. the animal is signaled that a third, fourth, etc., sample are available for sampling and then the animal's response to each additional sample is received).

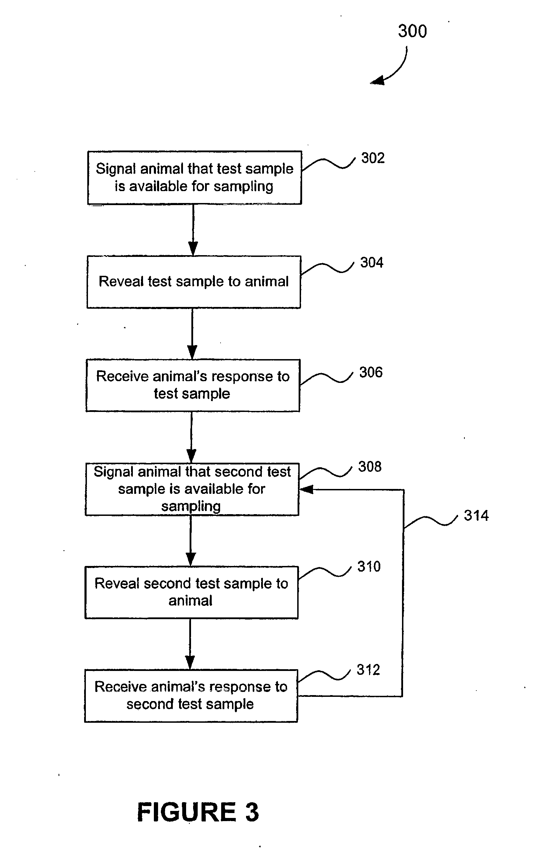

Figure **3** shows a flowchart **300** describing another method of obtaining an animal's response to one or more test samples for use with an apparatus comprising: a support platform, means for supporting one or more samples, means for concealing the one or more samples, means for signaling an animal to sample the contents of the one or more samples, and means for the animal to record a sensory response to the sampled one or more samples.

In step **302,** an animal is signaled that a test sample is available for sampling. The animal can be signaled that a sample is available for sampling using any suitable means disclosed herein or known in the art. In step **304,** a test sample is revealed to the animal. Any means suitable for concealing a test sample, and then revealing the test sample to the animal, can be used. For example, a movable door, panel or other partition can be used to conceal the sample from the animal, and then moved to reveal the sample to the animal. Additional means for revealing the sample to the animal include those described herein or known in the art. The steps of signaling the animal that a sample is available for sampling **302** and revealing the sample to the animal **304** can be performed in any order. In step **306,** the animal's response to the test sample is received. Suitable means for receiving/obtaining the animal's response to the test sample include those described herein as well as additional means known to those skilled in the art.

At step **308,** the animal is signaled that a second test sample is available for sampling. In step **310,** this second test sample is revealed to the animal, and in step **312,** the animal's response to the 2^{nd} sample is received/obtained. Suitable means for performing these various steps include those described herein as well as additional means known to those skilled in the art. In step **314,** steps **308** through **312** can then be repeated until all of the samples have been sampled by the animal (i.e. the animal is signaled that a third, fourth, etc., sample are available for sampling, the additional sample(s) are revealed to the animal, and then the animal's response to each additional sample is received).

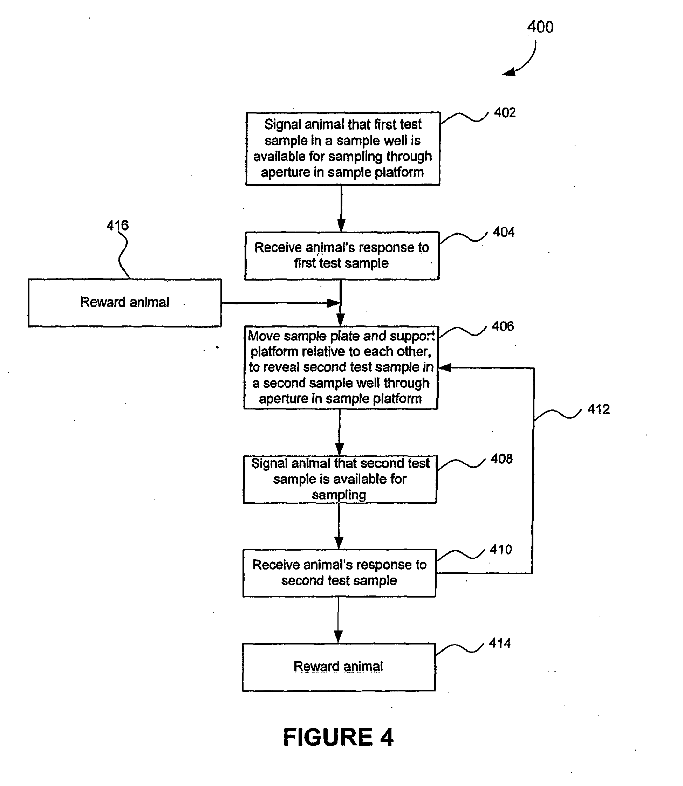

Figure **4** shows a flowchart **400** describing a further method of obtaining an animal's response to one or more test samples for use with an apparatus comprising: a support platform comprising one or more apertures, a sample plate having a plurality of sample wells formed therein oriented below the support platform, means for moving the sample plate and the support platform relative to each other, means for signaling an animal to sample the contents of the one or more sample wells, and means for the animal to record a sensory response to the sampled contents.

In step **402,** an animal is signaled that a first test sample in a sample well is available for sampling through an aperture in the sample platform. For example, as shown in Figure **1****,** a first sample well **106 is** positioned below aperture **126** and the animal is signaled that the first sample is available for sampling. The animal can be signaled that a sample is available for sampling using any suitable means described herein or known in the art. For example, signal lights **110,** can be used to signal the animal. In step **404,** the animal's response to the first sample is received/obtained. Suitable means for obtaining the animal's response to the first test sample include those described herein and additional means known to those skilled in the art. For example, the animal's response can be obtained by the animal contacting one or more levers **112** and/or activating one or more nose-poke wells **114.**

In step **406,** the sample plate and the support platform are moved relative to each other to reveal a second test sample in a second sample well through the aperture in the sample platform. For example, as shown in Figure 1, after the first sample in a sample well **106** has been sampled and the response received, the sample plate **104** is moved (e.g., through the use of motion table **118)** so that a second sample well **106** containing a second sample is positioned beneath aperture **126** in support platform **102.** In other embodiments, support platform **102** can be moved relative to sample plate **104,** or both can be moved relative to each other. Means for moving sample plate **104** and support platform relative to each other include those described herein as well as additional such means known to those skilled in the art. In step **408,** the animal is signaled that the second test sample is available for sampling (e.g., using signal lights **110).** It should be understood that the steps of moving the sample plate **104** and support platform **102** relative to each other to reveal a second sample, and the step of signaling the animal to sample the second sample **408** can be performed in any order.

In step **410,** the animal's response to the second test sample is received/obtained (e.g., by the animal contacting one or more levers, **112,** or activating one or more nose-poke wells, **114).** In step **412,** steps **406** through **410** are then repeated until all of the samples have been sampled by the animal (i.e. the sample plate **104** and the support platform **102** are moved relative to each other to reveal a third, fourth, etc., sample; the animal is signaled that third, fourth, etc., samples are available for sampling; and the animal's response to each additional sample is received).

In step **414,** the animal is rewarded for completing the sampling task(s). In additional embodiments, flowchart **400** can optionally comprise rewarding the animal in step **416** after it has provided a response to the first sample in step **404.** Suitable means for rewarding the animal include those described herein, as well as additional means known to the skilled artisan. For example, the animal can be rewarded by being allowed to eat from food hopper **130.**

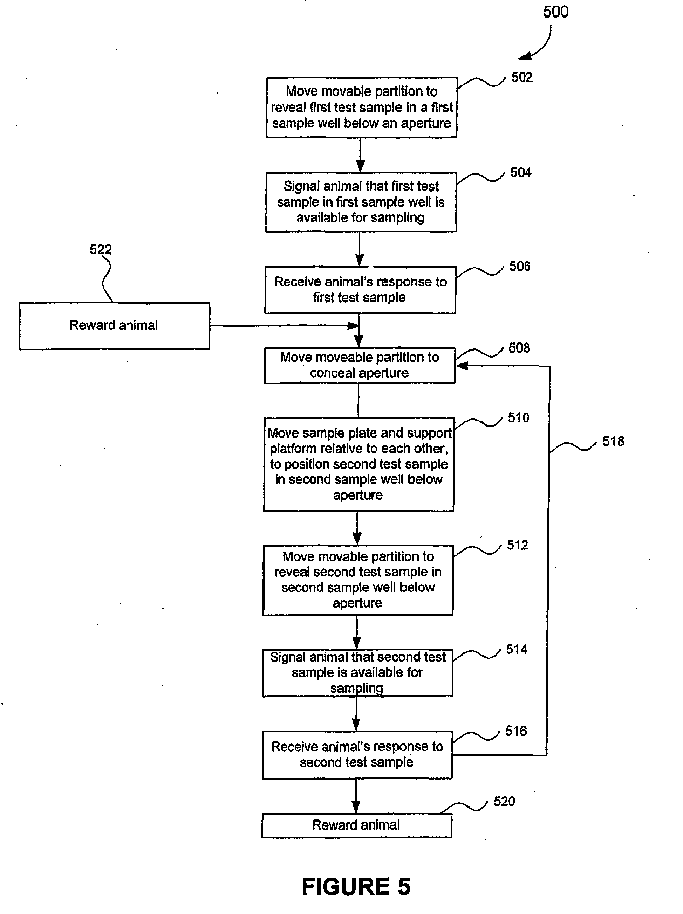

Figure **5** shows a flowchart **500** describing a still further method of obtaining an animal's response to one or more test samples for use with an apparatus comprising: a support platform comprising one or more apertures and one or more movable partitions concealing the apertures, a sample plate having a plurality of sample wells formed therein oriented below the support platform, means for moving the sample plate and the support platform relative to each other, means for signaling an animal to sample the contents of the one or more sample wells, means for the animal to record a sensory response to the sampled one or more contents, and means for rewarding the animal.

In step **502,** (with reference to Figure 1) a movable partition **128** is moved to reveal a first test sample in a first sample well 106 below an aperture **126** in support platform **102.** In step **504,** the animal is signaled that the first test sample in the sample well **106** is available for sampling. Any suitable means for signaling the animal, such as those described herein or known to those skilled in the art, can be used. For example, the animal may be signaled through the use of one or more signal lights **110.** It should be understood that the steps of moving the movable partition to reveal the test sample **502** and signaling the animal that the test sample is available for sampling **504** can be performed in any order. In step 506, the animal's response to the first test sample is then received/obtained. Any suitable means for obtaining the animal's response to the sample may be used, such as those described herein, as well as additional means known to those skilled in the art. For example, the animal's response can be received by the animal contacting one or more levers **112** or activating one or more nose-poke wells **114.**

In step **508,** the movable partition **128** is then moved so as to conceal the aperture **126** in support platform **102.** In step **510,** sample plate **104** and support platform **102** are moved relative to each other, thereby positioning a second test sample in a second sample well **106** below aperture **126** in support platform **102,** for example by using motion table **118.**

In step **512,** movable partition **128** is moved to reveal the second test sample in the second sample well **106.** In step **514,** the animal is signaled that the second test sample in the sample well is available for sampling. It should be understood that steps **512** and **514** of respectively moving the movable partition to reveal the second test sample, and signaling the animal that the second test sample is available for sampling, can occur in any order. In step **516,** the animal's response to the first test sample is then received/obtained. For example, the animal's response can be received by the animal contacting one or more levers **112** or activating one or more nose-poke wells **114.** In step **518,** steps **508** through **516** are repeated until all test samples have been sampled by the animal. After all test samples have been sampled by the animal (i.e., constituting a completed analysis session), the animal is rewarded in step **520,** for example, by allowing the animal to eat from food hopper **130.** In additional embodiments, flowchart **500** can optionally comprise rewarding the animal in step **522** after it has provided a response to the first sample in step **506.** In still further embodiments, the animal can be rewarded following the completion of each and every sample, or a select number of samples, as desired, during the analysis session.

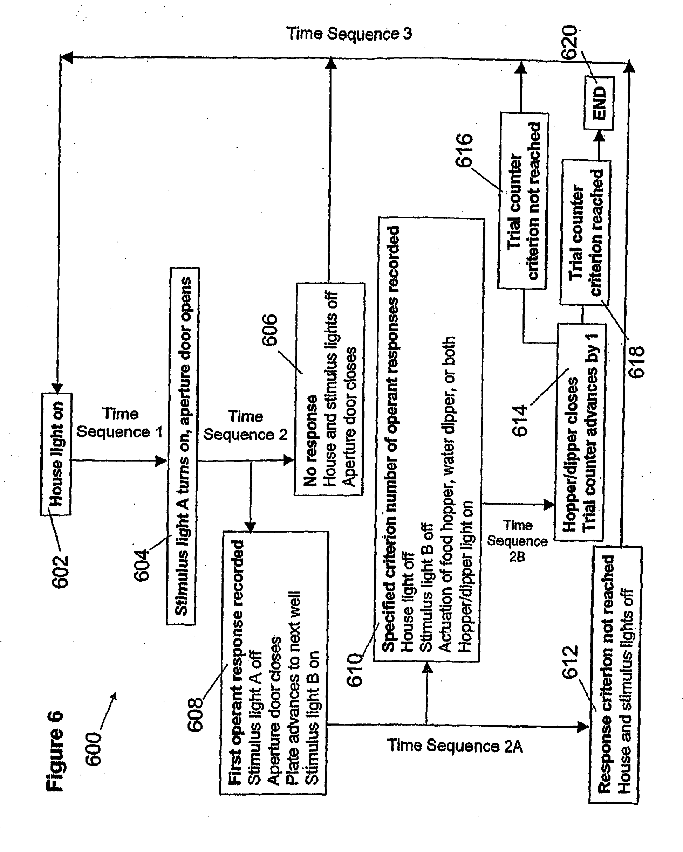

Flowchart **600** in Figure **6** (with reference to Figure **1****)** shows an example of a sensory discrimination session that can be produced using the apparatus and methods described herein, and the various iterations/scenarios that can occur during the session. It should be understood that the session described in flowchart **600** represents only a set of possible scenarios, and other sensory discrimination sessions/scenarios can be produced using the methods and apparatus described herein, and will be readily apparent to those skilled in the art. The various steps or "actions" noted in Figure **6** can be coordinated through the use of suitable computer-based or other automated controls. The design of computer programs to control the apparatus and execution of the steps/actions noted in Figure **6** (as well as additional steps/actions described herein) are easily accomplished by, and well known to those skilled in the art. In addition, the various steps/actions can also be conducted manually, e.g., by a human operator.

In step **602,** a house light (e.g., general light in the animal's housing, not shown in Figure 1) is turned on, indicating to the animal that a sensory discrimination session is about to begin. In step **604,** a first signal light **110** (e.g., A) is turned on, indicating to the animal that a sample is ready to be sampled. Either before, after, or simultaneously with the illumination of signal light A, aperture **126** is opened by sliding or otherwise moving movable partition **128.** In one possible scenario, as noted in step **606,** the animal may not sample the sample, or if it does, may simply not respond to the sample. In such a scenario where no response is received, after a pre-set amount of time (e.g., on the order of a few minutes), the session is reset, i.e. the house and signal lights are shut off, the aperture door is closed, and the session is re-set back to step **602.** As noted above, this can be accomplished manually by an operator, or it can be automated through the use of a computer-control system.

In a second possible scenario, as shown in step **608,** the animal actually responds to the first sample. That is, the animal samples the sample and then "records" its response to the sample by, for example, contacting one or more levers **112** or activating one or more nose-poke wells **114,** or other means for obtaining the animal's response, such as those described herein. Once the animal's response to the first sample has been obtained, the first signal light **110,** A, is turned off, movable partition **128** is moved so as to close aperture **126** and support platform **102** and sample support means (e.g., sample plate **104)** are moved relative to each other such that a second test sample (for example in a second sample well **106)** is positioned beneath aperture **126.** A second signal light **110,** B, is also turned on at this time. This second signal light indicates to the animal that analysis of the first sample has been successfully completed.

In most analysis sessions, a specified criterion number of samples/responses will be required prior to rewarding the animal, or stopping the analysis session. In step **612,** if it is determined that the response criteria have not been reached (i.e. not enough samples sampled/recorded by the animal, for example, only the first sample out of 5 required), the house and stimulus lights are turned off, and the analysis session is re-set back to step **602** to allow the animal to sample the second test sample (i.e. the second test sample that was moved under aperture **126** in step **608).** Steps 604 and 608 are then repeated as described above, recording the animal's response to the second test sample (or the system is re-set in step **606** if the second sample is not sampled/recorded). In step **608,** a third test sample is then positioned below aperture **126.** If it is determined that the specified criterion number of responses has still not been reached, step **612** will re-set the analysis session back to step **602,** and the sequence will continue. This loop (time sequence **1,** time sequence 2, time sequence **2A** and time sequence **3** as designated in flowchart **600)** will continue until the specified criterion number of responses are recorded (i.e. sampled/recorded by the animal).

In step **610,** once the specified number of operant responses are recorded, (i.e. the last requisite sample is sampled and recorded in step **608)** the house lights are turned off, the signal light **110,** B, is turned off, and the animal is rewarded, for example through the use of food hopper **130,** water dipper, and/or other means for rewarding the animal. For example, 5 test samples may be required to be sampled and recorded by the animal in order to reach the specified number of criterion responses. Any number of responses though can be used as the criterion for determining when the animal is rewarded or the analysis is complete (e.g, 1, 2, 3, 4, 5, 10, 15, 20, 30, 40, 50, etc. samples/responses).

Once the animal has been rewarded, the analysis session then enters time sequence **2B** as shown in flowchart **600.** In step **614,** the animal reward means is closed, and a counter is advanced by 1, indicating the successful completion of one test session (i.e. sampling and recording of the requisite number of samples). In steps **616** and **618,** it is determined whether or not the criteria of the complete analysis session have been reached. For example, if the analysis session is designed to test a total of 50 samples, and the specified criterion number of responses required for the animal to be rewarded (step **610)** is set at 5, then 10 total test sessions are required to complete the full analysis session (i.e. 10 sets of 5 animal sampling/responses). In the case where the entire analysis session has not been completed (i.e. all 50 samples), step **616** then resets the analysis session back to step **602** (time sequence **3)** and the sampling/response analysis discussed above is repeated. If it is determined that the entire analysis session has been completed, step **618** then signals that the session is to be ended, in step **620.**

The apparatus and methods described herein therefore allow for an animal to sample and analyze a large number of samples in a very rapid manner. For example, if a 96 well plate is used as sample support means, 96 total samples can be analyzed by a single animal (or multiple animals if desired) in a single analysis session. For example, the specified criterion number of responses required for the animal to be rewarded can be set at 4 (or any number). Thus, the animal will be rewarded after the completion of every 4 samples sampled/recorded. The system is then reset in steps **614-616** until 24 iterations are completed (i.e. 4 x 24 = 96 total samples). The analysis system and apparatus can be used to sample any number of samples, e.g., 2, 3, 4, 5, 10, 20, 30, 40, 50, 100, 200, 300, etc., using the iterative methods and apparatus described herein.

The use of sample support means such as sample plate **104** (e.g., a 6, 12, 24, 48, 96, 192 or 384 well sample plate) allows a user to utilize very small sample sizes in various sensory discrimination analyses. For example, in the case of liquid samples, sample sizes on the order of 10's to 100's of microliters can be used (or larger volumes can be used as well). This is highly advantageous for samples that may be expensive or difficult to produce in large quantities. This volume (e.g., 10 µL) in the well of a 96 well sample plate though, is more than adequate for an animal to sample and record a sensory response. In addition to liquid samples, solid samples can also be used in the various apparatus and methods described herein.

While taste discrimination is one example of a sensory analysis that can be performed using the methods and apparatus described herein, additional sensory discrimination tests can also be performed. For example, olfactory sensory discrimination can be tested by using a sample support means that comprises large/deep wells **106,** thereby allowing larger amounts of volatile samples to be used to facilitate analysis by the animal.

The apparatus and methods described herein can also be used for selective delivery of food or medicine to an animal. For example, the apparatus and methods can be used to selectively move the sample support means and support platform relative to one another and/or move the movable partition to reveal a specific type of food or medicine to an animal at a predetermined time, or predetermined amounts at various times. The apparatus and methods described herein can also be used in various other discrimination settings beyond sensory discrimination. For example, the effects of one or more pharmaceuticals, toxins, or other agents can be assessed using the various systems and methods described herein.

## Claims

1. An apparatus (100) for use in animal sensory discrimination, comprising:
a support platform (102);
means (104) for supporting one or more samples, wherein the sample support means comprises a sample plate having a plurality of sample wells (106) formed therein;
means for moving the sample support means (104) and the support platform (102) relative to each other;
means (110) for signalling an animal to sample the contents of the one or more samples and
means (112, 114) for the animal to record a sensory response to the sampled one or more samples;

2. The apparatus of claim 1, wherein the sensory response discriminates between at least two taste or olfactory stimuli.

3. The apparatus of claim 1, further comprising means for moving the sample support means (104) and the support platform (102) relative to each other in at least two orthogonal directions.

4. The apparatus of claim 1, wherein the support platform (102) comprises one or more apertures (126) which allow access to the one or more samples.

5. The apparatus of claim 4, wherein the support platform (102) further comprises one or more movable partitions (128) concealing the apertures (126).

6. The apparatus of claim 1, wherein the sample support means (104) is oriented below the support platform (102).

7. The apparatus of claim 1, further comprising means for concealing the one or more samples.

8. the apparatus of claim 7, wherein the concealing means comprises one or more movable partitions (128).

9. The apparatus of claim 1, wherein the support platform (1 02) comprises one or more apertures (126) which allow access to the one or more sample wells (106).

10. The apparatus of claim 9, further comprising means for concealing the one or more apertures (126).

11. The apparatus of claim 10, wherein the concealing means comprises one or more movable partitions (128) concealing the apertures (126).

12. The apparatus of claim 1, wherein the sample plate (104) comprises 6, 12, 24, 48 or 96 wells.

13. The apparatus of claim 3, wherein the moving means comprises an x-y-z motion table (118).

14. The apparatus of claim 1, wherein the means for signalling an animal comprises one or more signal lights (110).

15. The apparatus of claim 1, wherein the means for the animal to record a sensory response comprises one or more levers (112) and/or one or more nose-poke wells (114).

16. The apparatus of claim 3, further comprising means for rewarding the animal.

17. The apparatus of claim 16, wherein the animal rewarding means comprises a food hopper (130) or a water dispenser.

18. A method of obtaining an animal's response to one or more test samples, for use with an apparatus (100) comprising a support platform (102), means (104) for supporting one or more samples, wherein the sample support means comprises a sample plate having a plurality of sample wells (106) formed therein; means for moving the sample support means (104) and the support platform (102) relative to each other; means (110) for signalling an animal to sample the contents of the one or more samples, and means (112, 114) for the animal to record a sensory response to the sampled one or more samples, comprising:
a) signalling the animal that a test sample is available for sampling; and
b) receiving the animal's response to the test sample wherein the response discriminates between at least two taste or olfactory stimuli.

19. The method of claim 18, further comprising:
c) signalling the animal that a second test sample is available for sampling; and
d) receiving the animal's response to the second test sample.

20. The method of claim 19, further comprising:
e) repeating steps (c) through (d) until all of the test samples have been sampled
by the animal.

## Patentansprüche

1. Vorrichtung (100) zur Verwendung für die sensorische Unterscheidung bei Tieren, umfassend:
eine Trägerplattform (102);
Trägermittel (104) für eine oder mehrere Proben, wobei der Probenträger eine Probenplatte mit einer Vielzahl von darin ausgebildeten Probenmulden (106) umfasst;
Mittel zum Bewegen des Probenträgers (104) und der Trägerplattform (102) relativ zueinander;
Mittel (110), um einem Tier zu signalisieren, den Inhalt der einen oder mehreren Proben zu probieren, und
Mittel (112, 114), mit denen das Tier eine sensorische Reaktion auf die eine oder mehreren probierten Proben aufzeichnen kann.

2. Vorrichtung nach Anspruch 1, wobei die sensorische Reaktion zwischen mindestens zwei Geschmacksreizen oder olfaktorischen Reizen unterscheidet.

3. Vorrichtung nach Anspruch 1, die ferner Mittel zum Bewegen des Probenträgers (104) und der Trägerplattform (102) relativ zueinander in mindestens zwei orthogonale Richtungen umfasst.

4. Vorrichtung nach Anspruch 1, wobei die Trägerplattform (102) eine oder mehrere Öffnungen (126) umfasst, die den Zugang zu der einen bzw. den mehreren Proben erlauben.

5. Vorrichtung nach Anspruch 4, wobei die Trägerplattform (102) ferner eine oder mehrere bewegliche Trennvorrichtungen (128) umfasst, welche die Öffnungen (126) verdecken.

6. Vorrichtung nach Anspruch 1, wobei der Probenträger (104) unter der Trägerplattform (102) ausgerichtet ist.

7. Vorrichtung nach Anspruch 1, die ferner Mittel zum Abdecken der einen oder mehreren Proben umfasst.

8. Vorrichtung nach Anspruch 7, wobei das Abdeckmittel eine oder mehrere bewegliche Trennvorrichtungen (128) umfasst.

9. Vorrichtung nach Anspruch 1, wobei die Trägerplattform (102) eine oder mehrere Öffnungen (126) umfasst, die den Zugang zu der einen bzw. den mehreren Probenmulden (106) erlauben.

10. Vorrichtung nach Anspruch 9, ferner umfassend Mittel zum Abdecken der einen oder mehreren Öffnungen (126).

11. Vorrichtung nach Anspruch 10, wobei das Abdeckmittel eine oder mehrere bewegliche Trennvorrichtungen (128) umfasst, welche die Öffnungen (126) verdecken.

12. Vorrichtung nach Anspruch 1, wobei die Probenplatte (104) 6, 12, 24, 48 oder 96 Mulden umfasst.

13. Vorrichtung nach Anspruch 3, wobei das Bewegungsmittel einen x-y-z-Bewegungstisch (118) umfasst.

14. Vorrichtung nach Anspruch 1, wobei das Signalisierungsmittel für ein Tier eine oder mehrere Signallampen (110) umfasst.

15. Vorrichtung nach Anspruch 1, wobei das Mittel, mit dem das Tier eine sensorische Reaktion aufzeichnen kann, einen oder mehrere Hebel (112) und/oder eine oder mehrere Mulden (114) zum Hineinstecken der Nase umfasst.

16. Vorrichtung nach Anspruch 3, die ferner Mittel zum Belohnen des Tieres umfasst.

17. Vorrichtung nach Anspruch 16, wobei das Tierbelohnungsmittel einen Futtertrichter (130) oder einen Wasserspender umfasst.

18. Verfahren zum Erhalten der Reaktion eines Tieres auf eine oder mehrere Testproben, zur Verwendung bei einer Vorrichtung (100), die Folgendes umfasst: eine Trägerplattform (102), Trägermittel (104) zum Tragen einer oder mehrerer Proben, wobei der Probenträger eine Probenplatte mit einer Vielzahl von darin ausgebildeten Probenmulden (106) umfasst; Mittel zum Bewegen des Probenträgers (104) und der Trägerplattform (102) relativ zueinander; Mittel (110), um einem Tier zu signalisieren, den Inhalt der einen oder mehreren Proben zu probieren, und Mittel (112, 114), mit denen das Tier eine sensorische Reaktion auf die eine oder mehreren probierten Proben aufzeichnen kann, mit den folgenden Schritten:
a) es wird dem Tier signalisiert, dass eine Testprobe zum Probieren zur Verfügung steht; und
b) es wird die Reaktion des Tieres auf die Testprobe empfangen, wobei die Reaktion zwischen mindestens zwei Geschmacksreizen oder olfaktorischen Reizen unterscheidet.

19. Verfahren nach Anspruch 18, ferner mit den folgenden Schritten:
c) es wird dem Tier signalisiert, dass eine zweite Testprobe zum Probieren zur Verfügung steht; und
d) es wird die Reaktion des Tieres auf die zweite Testprobe empfangen.

20. Verfahren nach Anspruch 19, ferner mit dem folgenden Schritt:
e) Wiederholen der Schritte (c) bis (d), bis alle Testproben von dem Tier probiert wurden.

## Revendications

1. Appareil (100) à utiliser pour la différenciation sensorielle animale, comprenant :
une plateforme de support (102) ;
un moyen (104) permettant de supporter un ou plusieurs échantillons, dans lequel le moyen de support d'échantillon comprend une plaque d'échantillon ayant une pluralité de puits d'échantillon (106) formés à l'intérieur ;
un moyen permettant de déplacer le moyen de support d'échantillon (104) et la plateforme de support (102) l'un par rapport à l'autre ;
un moyen (110) permettant de signaler à un animal de goûter aux contenus des un ou plusieurs échantillons et
un moyen (112, 114) permettant à l'animal d'enregistrer une réponse sensorielle aux un ou plusieurs échantillons goûtés.

2. Appareil selon la revendication 1, dans lequel la réponse sensorielle fait la différence entre au moins deux stimuli gustatifs ou olfactifs.

3. Appareil selon la revendication 1, comprenant en outre un moyen permettant de déplacer le moyen de support d'échantillon (104) et la plateforme de support (102) l'un par rapport à l'autre dans au moins deux directions orthogonales.

4. Appareil selon la revendication 1, dans lequel la plateforme de support (102) comprend une ou plusieurs ouvertures (126) qui permettent un accès aux un ou plusieurs échantillons.

5. Appareil selon la revendication 4, dans lequel la plateforme de support (102) comprend en outre une ou plusieurs cloisons mobiles (128) dissimulant les ouvertures (126).

6. Appareil selon la revendication 1, dans lequel le moyen de support d'échantillon (104) est orienté sous la plateforme de support (102).

7. Appareil selon la revendication 1, comprenant en outre un moyen permettant de dissimuler les un ou plusieurs échantillons.

8. Appareil selon la revendication 7, dans lequel le moyen de dissimulation comprend une ou plusieurs cloisons mobiles (128).

9. Appareil selon la revendication 1, dans lequel la plateforme de support (102) comprend une ou plusieurs ouvertures (126) qui permettent un accès aux un ou plusieurs puits d'échantillon (106).

10. Appareil selon la revendication 9, comprenant en outre un moyen permettant de dissimuler les une ou plusieurs ouvertures (126).

11. Appareil selon la revendication 10, dans lequel le moyen de dissimulation comprend une ou plusieurs cloisons mobiles (128) dissimulant les ouvertures (126).

12. Appareil selon la revendication 1, dans lequel la plaque d'échantillon (104) comprend 6, 12, 24, 48 ou 96 puits.

13. Appareil selon la revendication 3, dans lequel le moyen de déplacement comprend une table de mouvement x-y-z (118).

14. Appareil selon la revendication 1, dans lequel le moyen de signalisation à un animal comprend un ou plusieurs indicateurs lumineux (110).

15. Appareil selon la revendication 1, dans lequel le moyen permettant à l'animal d'enregistrer une réponse sensorielle comprend un ou plusieurs leviers (112) et/ou un ou plusieurs puits permettant de donner un coup de museau (114).

16. Appareil selon la revendication 3, comprenant en outre un moyen permettant de récompenser l'animal.

17. Appareil selon la revendication 16, dans lequel le moyen permettant de récompenser l'animal comprend une mangeoire (130) ou un distributeur d'eau.

18. Procédé d'obtention d'une réponse d'animal à un ou plusieurs échantillons d'essai, à utiliser avec un appareil (100) comprenant une plateforme de support (102), un moyen (104) permettant de supporter un ou plusieurs échantillons, dans lequel le moyen de support d'échantillon comprend une plaque d'échantillon ayant une pluralité de puits d'échantillon (106) formés à l'intérieur ; un moyen permettant de déplacer le moyen de support d'échantillon (104) et la plateforme de support (102) l'un par rapport à l'autre ; un moyen (110) permettant de signaler à un animal de goûter aux contenus des un ou plusieurs échantillons, et un moyen (112, 114) permettant à un animal d'enregistrer une réponse sensorielle aux un ou plusieurs échantillons goûtés, comprenant :
a) la signalisation à un animal que l'échantillon d'essai est disponible pour être goûté ; et
b) la réception de la réponse de l'animal à l'échantillon d'essai, dans lequel la réponse fait la différence entre au moins deux stimuli gustatifs ou olfactifs.

19. Procédé selon la revendication 18, comprenant en outre :
c) la signalisation à l'animal que le second échantillon d'essai est disponible pour être goûté ; et
d) la réception de la réponse de l'animal au second échantillon d'essai.

20. Procédé selon la revendication 19, comprenant en outre :
e) la répétition des étapes (c) à (d) jusqu'à ce que tous les échantillons d'essai aient été goûtés par l'animal.
